# EUROPÄISCHE PATENTSCHRIFT

(11) **EP 0 469 284 B1**
(45) Veröffentlichungstag und Bekanntmachung des Hinweises auf die Patenterteilung: **25.01.1995**
(21) Anmeldenummer: 91110338.0
(22) Anmeldetag: 22.06.1991
(51) Int. Cl.: F16B 12/10, F16B 12/46, F16B 7/18, E04B 2/76

(54) **Montageelement**
Mounting element
Elément de montage

(30) Priorität: 28.07.1990 DE 9011138 U
(43) Veröffentlichungstag der Anmeldung: 05.02.1992
(73) Patentinhaber: ROBERT BOSCH GMBH, 70442 Stuttgart (DE)
(72) Erfinder: Ludwig, Peter, W-7400 Tuebingen (DE); Berger, Johannes, W-7060 Schorndorf (DE)

(56) Entgegenhaltungen:
- EP-A- 0 183 395
- DE-A- 3 224 806
- FR-A- 2 499 175
- GB-A- 1 114 937

## Beschreibung

### Stand der Technik

Die Erfindung geht aus von einem Montageelement gemäß Oberbegriff des Anspruch 1. Derartige Montageteile, wie Gußprofilteile oder Gußgehäuseteile, dienen als Anbauteile auf Montageflächen oder als Fügeteile untereinander. Zur Vorbestimmung der Lage beim Fügevorgang ist es üblich, Zentriermittel einzusetzen, die das Montageelement am anderen Bauteil zentrieren. Dazu ist üblicherweise an einem der zu fügenden Bauteile ein Vorsprung vorgesehen, der am anderen Bauteil in eine entsprechende Vertiefung eingreift. Der Vorsprung, der verschiedenste Geometrien aufweisen kann, ragt dabei aus der Fügefläche hervor. Das Montageelement und das andere Bauteil, mit dem das Montageelement zu fügen ist, sind somit aufeinander abgestimmt und das Montageelement läßt sich nur für diese eine Montageaufgabe einsetzen. Insbesondere bei Modul-Montageelementen, wie sie z.B. Profilschienen, Profilwinkel etc. darstellen, ist deren variabler Einsatz für verschiedene Montageaufgaben erforderlich. Es ist deshalb allgemein üblich, um Zentrierungen nur wahlweise zu nutzen, das Montageelement und und das zu fügende Bauteil mit jeweils einer Nut zu versehen, in die zur Zentrierung der beiden Bauteile mindestens ein Nutenstein eingesetzt wird. Damit verbunden ist aber ein zusätzlicher Fertigungsaufwand zur Herstellung der Nutensteine und Montageaufwand beim Einsetzen von mindestens einem Nutenstein.

In der EP-A-183 395, von welcher der Anspruch 1 ausgeht, ist ein Montageelement beschrieben, das zur Zentrierung an einer Fügefläche ein Zentriermittel hat, welches als ein aus der Fügefläche herausragender Vorsprung ausgebildet ist. Bei Montageaufgaben ohne Zentrierung kann dieser Vorsprung jedoch störend sein.

### Vorteile der Erfindung

Das erfindungsgemäße Montageelement mit dem kennzeichnenden Merkmal des Anspruchs 1 hat demgegenüber den Vorteil, daß das Montageelement sowohl für Montageaufgaben mit Zentrierung als auch ohne Zentrierung beim Fügen eingesetzt werden kann. Dabei sind keine zusätzlichen Einzelteile erforderlich, die die Zentrierung übernehmen. Durch das Vorhandensein einer Sollbruchstelle am Zentriermittel kann mit einem normalen Werkzeug, wie zum Beispiel Schraubendreher, und mit einem Handgriff das Zentriermittel ausgebrochen werden. Damit lassen sich Zentriermittel auch an Modul-Montageelementen vorsehen, wobei diese Modul-Montageelemente für die verschiedenen Montageaufgaben verwendet werden können.

Durch die in den Unteransprüchen aufgeführten Maßnahmen sind vorteilhafte Weiterbildungen des im Anspruch 1 angegebenen Montageelements möglich. Besonders vorteilhaft ist es, daß die Abbrechzunge an der Fügefläche in Vertiefungen angeordnet ist und die Sollbruchstelle ebenfalls im Bereich der Vertiefung liegt. Damit ist gewährleistet, daß die Bruchstelle beim Fügen nicht stört. Weiterhin ist vorteilhaft, wenn die Vertiefung zumindest an einer Stelle der Zunge einen Graben bildet, so daß die der Zunge gegenüberliegende Grabenwand als Abstützfläche für das Werkzeug mit einem Hebelarm zum Einwirken der Bruchlast dient.

Eine sich nach allen Seiten trapezförmig verjüngende Abbrechzunge begünstigt die Zentrierung in der entsprechenden Vertiefung am anderen Bauteil.

### Zeichnung

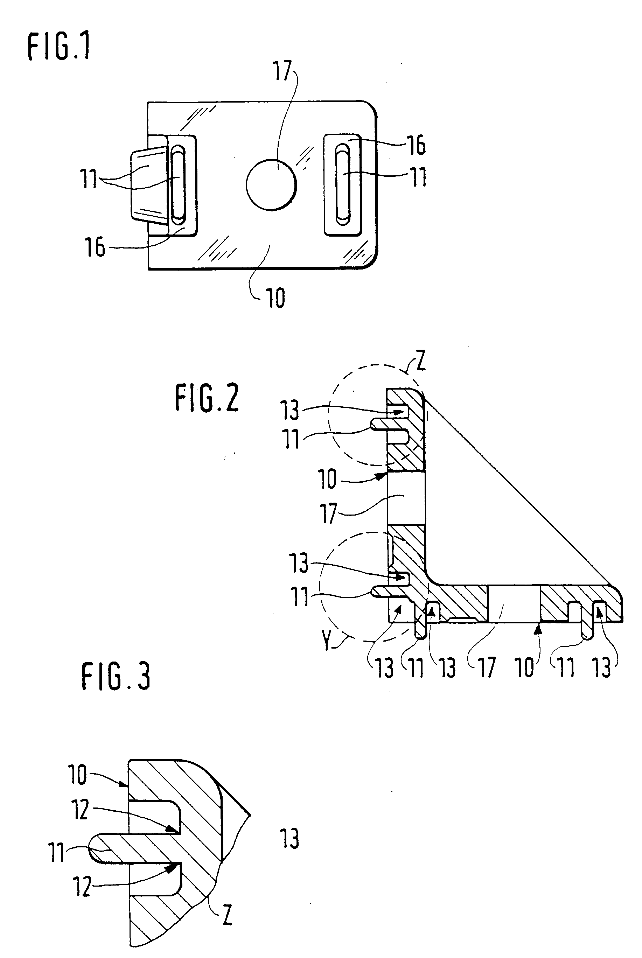

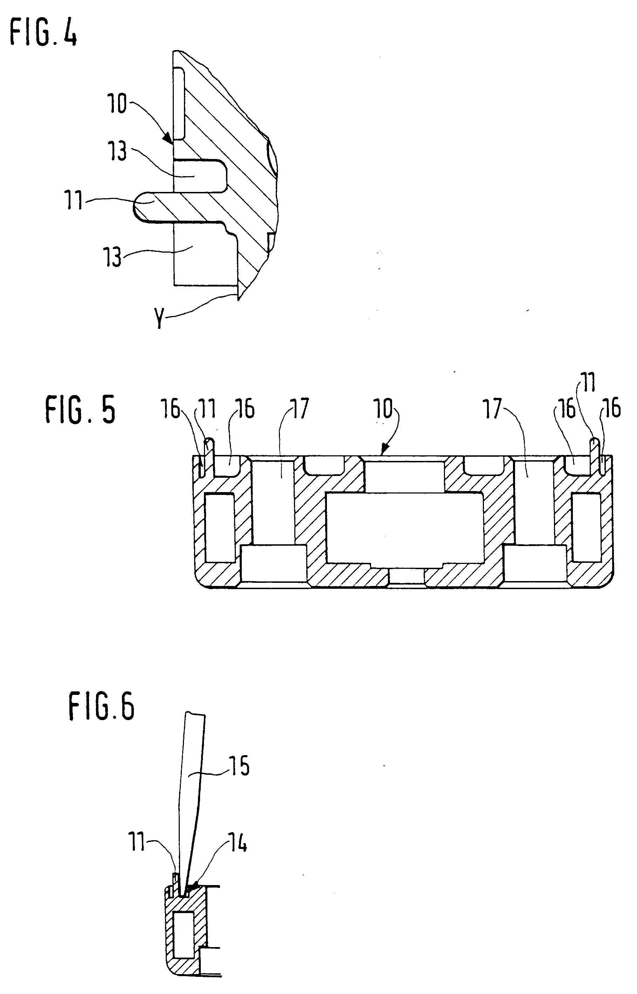

Zwei Ausführungsbeispiele der Erfindung sind in der Zeichnung dargestellt und in der nachfolgenden Beschreibung näher erläutert. Es zeigen Figur 1 einen Profilwinkel mit der Draufsicht auf eine seiner beiden Fügeflächen, Figur 2 eine Schnittdarstellung des Profilwinkels nach Figur 1, Figur 3 eine vergrößerte Darstellung eines Zentriermittels aus Figur 1 in Schnittdarstellung, Figur 4 eine vergrößerte Darstellung eines weiteren Zentriermittels nach Figur 1 in Schnittdarstellung, Figur 5 eine Schnittdarstellung durch ein Gehäuseteil und Figur 6 einen Ausschnitt am Gehäuseteil nach Figur 5 mit einem Zentriermittel und einem Werkzeug zum Ausbrechen des besagten Zentriermittels.

### Beschreibung der Ausführungsbeispiele

Figur 1 und 2 zeigt als Montageelement einen Profilwinkel mit zwei Fügeflächen 10, an denen jeweils zwei Abbrechzungen 11 angeordnet sind. Die Abbrechzungen 11 sind dabei gegenüber der Fügefläche 10 jeweils in einer Vertiefung 13 angeordnet. Jede der Abbrechzungen 11 weist eine Sollbruchstelle auf, die im vorliegenden Ausführungsbeispiel dadurch realisiert ist, daß die Abbrenzunge am Grund in der Vertiefung scharfkantig ausgebildet ist. Weiterhin besitzt jede Fügefläche 10 eine Bohrung 17, die als Durchführung für ein Befestigungselement, z.B. für eine Schraube, dient. Mit diesem nicht in der Zeichnung dargestellten Befestigungselement wird der Profilwinkel an ein nicht in der Zeichnung dargestelltes weiteres Bauteil gefügt.

Figur 3 zeigt die vergrößerte Darstellung einer Abbrechzunge 11, wie sie an den beiden spitzen Winkeln der beiden Fügeflächen 10 angeordnet sind. Daraus geht hervor, daß die Abbrechzunge 11 am Grund in den Vertiefungen 13 scharfkantig ausgebildet ist. Diese scharfkantige Ausbildung wirkt zugleich als Sollbruchstelle 12. Die beiden an den beiden spitzen Winkeln der Fügefläche 10 angeordneten Abbrechzungen 11 sind jeweils in eine Vertiefung 13 eingelassen, die, wie aus Figur 1 hervorgeht, einen umlaufenden Graben 16 bilden.

Figur 4 zeigt eine vergrößerte Darstellung einer der beiden am rechten Winkel des Profilwinkels angeordneten Abbrechzungen 11. Wie aus Figur 1 hervorgeht, sind diese Abbrechzungen ebenfalls in Vertiefungen 13 eingelassen wobei die Vertiefungen jeweils an drei Seiten der Abbrechzungen 11 einen Graben 16 bilden.

Figur 5 zeigt als zweites Ausführungsbeispiel ein Gehäuse, bei welchem an den beiden Außenkanten einer Fügefläche 10 jeweils eine Abbrechzunge 11 herausragt. Die beiden Abbrechzungen 11 sind dabei ebenfalls, wie im ersten Ausführungsbeispiel in Vertiefungen 13 angebracht, wobei beide Vertiefungen 13, wie aus Figur 5 und Figur 6 ersichtlich ist, jeweils einen Graben um die jeweilige Abbrechzunge 11 bilden. Die Grabenbreite ist dabei an den beiden langen Seiten verschieden breit. Weiterhin befinden sich im Gehäuse zwei Stufenbohrungen 17, die zur Durchführung von zwei nicht in der Zeichnung dargestellten Senkschrauben dienen, mit denen die Befestigung des Gehäuses an einem nicht dargestellten weiteren Bauteil erfolgt.

Zur Verdeutlichung der Wirkungsweise ist in Figur 6 eine Schnittdarstellung durch eine Abbrechzunge 11 dargestellt, an der ein Werkzeug 15 angreift. Das Werkzeug 15, das im vorliegenden Ausführungsbeispiel ein Schraubendreher ist, greift mit seiner keilförmigen Spitze in den längs zur Abbrechzunge 11 verlaufenden Graben ein.

Durch Einsatz des Werkzeuges 15 als Hebelarm in Richtung der Abbrechzunge 11 wird die Abbrechzunge an ihrer Sollbruchstelle, die sich, wie im ersten Ausführungsbeispiel beschrieben, durch die scharfkantige Ausbildung des Grundes der Abbrechzunge 11 bildet, ausgebrochen. Dabei stützt sich das Werkzeug 15 an der der Abbrechzunge 11 gegenüberliegenden Grabenwand 14 ab.

Durch die Spritzgußausführung der in beiden Ausführungsbeispielen dargestellten Montageelemente tritt an der Sollbruchstelle ein Sprödbruch auf. Die Geometrie der Abbrechzunbge 11 ist dabei so gewählt, daß die Bruchgrenze der Abbrechzunge 11 bei einer Bruchlast < 1000 N liegt. Diese Bruchlast wird mit dem Werkzeug 15 bei einem Hebelarm von 100 mm und einer daran angreifenden Abbrechkraft von 30 N erreicht.

Bei beiden Ausführungsbeispielen verjüngen sich die Abbrechzungen 11 nach allen Seiten trapezförmig. Damit ist gewährleistet, daß die Abbrechzunge 11 als Zentriermittel problemlos in die entsprechende Vertiefung an dem zu fügenden Bauteil einführbar ist.

Dadurch, daß die Zentriermittel entfernbar sind, kann das Montageelement sowohl für Montageaufgaben mit Verwendung eines Zentriermittels als auch für Montageaufgaben, die kein Zentriermittel benötigen, eingesetzt werden. Damit erhöht sich die Varianz der Einsatzmöglichkeiten des Montageelements.

## Patentansprüche

1. Montageelement mit mindestens einem an mindestens einer Fügefläche (10) vorgesehenen Zentriermittel, welches als ein aus der Fügefläche (10) herausragender Vorsprung ausgebildet ist, dadurch gekennzeichnet, daß der Vorsprung (11) eine Sollbruchstelle (12) hat, die in oder unterhalb der Ebene der Fügefläche (10) liegt.

2. Montageelement nach Anspruch 1, dadurch gekennzeichnet, daß der Vorsprung (11) eine am Montageelement angegossene Zunge ist.

3. Montageelement nach Anspruch 1 oder 2, dadurch gekennzeichnet, daß der Vorsprung (11) gegenüber der Fügefläche (10) in einer Vertiefung (13) angeordnet ist.

4. Montageelement nach einem der Ansprüche 1 bis 3, dadurch gekennzeichnet, daß die Sollbruchstelle (12) im Bereich der Vertiefung (13) liegt.

5. Montageelement nach einem der vorhergehenden Ansprüche, dadurch gekennzeichnet, daß die Sollbruchstelle (12) am Grund der Vertiefung (13) vorgesehen ist, wobei der Vorsprung (11) am Grund der Vertiefung (13) vorzugsweise scharfkantig ansetzt.

6. Montageelement nach einem der vorhergehenden Ansprüche dadurch gekennzeichnet daß die Vertiefung (13) zumindest an einer Seite des Vorsprungs (11) einen Graben bildet, so daß die dem Vorsprung (11) gegenüberliegende Grabenwand als Abstützfläche (14) für einen Hebelarm (15) zum Einwirken der Bruchlast dient.

7. Montageelement nach einem der vorhergehenden Ansprüche, dadurch gekennzeichnet, daß die Bruchgrenze des Vorsprungs (11) bei einer Bruchlast < 1000 N liegt.

8. Montageelement nach einem der vorhergehenden Ansprüche, dadurch gekennzeichnet, daß sich der Vorsprung (11) aus der Vertiefung heraus nach allen Seiten trapezförmig verjüngt.

## Claims

1. Assembly element having at least one centring means which is provided on at least one joint face (10) and is configured as a projection jutting out of the joint face (10), characterized in that the projection (11) has a predetermined breaking point (12) which is situated in or beneath the plane of the joint face (10).

2. Assembly element according to Claim 1, characterized in that the projection (11) is a tongue which is cast onto the assembly element.

3. Assembly element according to Claim 1 or 2, characterized in that the projection (11) is disposed opposite the joint face (10) in an indentation (13).

4. Assembly element according to one of Claims 1 to 3, characterized in that the predetermined breaking point (12) is situated in the region of the indentation (13).

5. Assembly element according to one of the preceding claims, characterized in that the predetermined breaking point (12) is provided at the bottom of the indentation (13), the projection (11) acting on the bottom of the indentation (13), preferably in a sharp-edged manner.

6. Assembly element according to one of the preceding claims, characterized in that the indentation (13) forms, at least on one side of the projection (11), a trench, so that the trench wall lying opposite the projection (11) serves as a supporting face (14) for a lever arm (15) for influencing the breaking load.

7. Assembly element according to one of the preceding claims, characterized in that the breaking limit of the projection (11) lies at a breaking load of < 1000 N.

8. Assembly element according to one of the preceding claims, characterized in that the projection (11) tapers trapezoidally out of the indentation to all sides.

## Revendications

1. Elément de montage avec au moins un moyen de centrage prévu sur au moins une face de jonction (10), moyen de centrage qui est constitué sous la forme d'une saillie, qui fait saillie à partir de la face de jonction, élément de montage caractérisé en ce que la saillie (11) a un point destiné à la rupture (12), qui se trouve dans le plan ou en dessous du plan de la face de jonction (10).

2. Elément de montage selon la revendication 1, caractérisé en ce que la saillie (11) est une languette formée par coulage sur l'élément de montage.

3. Elément de montage selon la revendication 1 ou 2, caractérisé en ce que la saillie (11) est disposée, par rapport à la face de jonction (10), dans un renfoncement (13).

4. Elément de montage selon l'une des revendications 1 à 3, caractérisé en ce que le point destiné à la rupture (12) se trouve dans la zone de renfoncement (13).

5. Elément de montage selon l'une des revendications précédentes, caractérisé en ce que le point destiné à la rupture (12) est prévu au fond du renfoncement (13), la saillie (11) étant attachée au fond du renfoncement (13) de préférence à angles vifs.

6. Elément de montage selon l'une des revendications précédentes, caractérisé en ce que le renfoncement (13) forme un fossé sur au moins un côté de la saillie (11), de telle sorte que la paroi du fossé située en regard de la saillie (11) serve de surface d'appui (14) pour un bras de levier (15) destiné à fournir la force de rupture.

7. Elément de montage selon l'une des revendications précédentes, caractérisé en ce que la limite de rupture de la saillie (11) se trouve à une force de rupture inférieure à 1000 N.

8. Elément de montage selon l'une des revendications précédentes, caractérisé en ce que la saillie (11) se rétrécit de tous les côtés, en forme de trapèze à partir du renfoncement.
